# EUROPÄISCHE PATENTSCHRIFT

(11) **EP 2 980 004 B1**
(45) Veröffentlichungstag und Bekanntmachung des Hinweises auf die Patenterteilung: **18.04.2018**
(21) Anmeldenummer: 14179346.3
(22) Anmeldetag: 31.07.2014
(51) Int. Cl.: B66F 9/075, E02F 9/16, B60J 7/16, B60R 21/11, B60R 21/13

(54) **Absenkbares Fahrerschutzdach**
Driver protection roof which can be lowered
Toit protège-conducteur pouvant être abaissé

(43) Veröffentlichungstag der Anmeldung: 03.02.2016
(73) Patentinhaber: Weidemann GmbH, 34519 Diemelsee-Flechtdorf (DE)
(72) Erfinder: Graute, Mathias, 34434 Borgentreich (DE); Petkau, Andreas, 34519 Diemelsee-Adorf (DE)
(74) Vertreter: Müller Hoffmann & Partner

(56) Entgegenhaltungen:
- EP-A2- 0 904 967
- DE-A1-102010 024 687
- DE-U1-202012 008 838
- JP-A- S5 976 337

## Beschreibung

Die Erfindung betrifft ein absenkbares Fahrerschutzdach für den Einsatz auf einer Arbeits- bzw. Erdbaumaschine nach EN 474, z.B. auf einem Laderfahrzeug wie einem Hoflader.

Sogenannte Hoflader sind meist kleinere Laderfahrzeuge, die in landwirtschaftlichen Betrieben zum Bewegen und Transportieren von schweren Gütern, wie zum Beispiel Strohballen, Düngemittelsäcken oder Tierfutter genutzt werden. Dabei ist es erforderlich, dass die Hoflader auch geeignet sind, auf engstem Raum zu rangieren und in Scheunen oder durch niedrige Tordurchbrüche zu fahren.

Für derartige Maschinen und deren Sicherheitsausstattung bestehen einschlägige Vorschriften (zum Beispiel EG-Maschinenrichtlinie 2006/42/EG, Geräte- und Produktsicherheitsgesetz GPSG), die bestimmte Sicherheitsbauteile erfordern. So sind für Laderfahrzeuge als Sicherheitseinrichtungen eine sogenannte ROPS sowie eine FOPS vorgeschrieben. ROPS ist die Abkürzung für den englischen Begriff "Roll Over Protective Structure" und wird im deutschen Sprachgebrauch als "Überrollschutzaufbau" bezeichnet. FOPS ist die Abkürzung des Begriffs "Falling Object Protective Structure" und wird im Deutschen als "Schutzaufbau gegen herabfallende Gegenstände von oben" bezeichnet.

Zur Umsetzung von ROPS und FOPS bei einem Hoflader ist es bekannt, ein Fahrerschutzdach mit einem starren Trägerrahmen auf dem Hoflader zu befestigen. Aufgrund der erforderlichen Bauhöhe, die insbesondere auch dadurch vorgegeben ist, dass der Fahrer des Laderfahrzeugs unterhalb von dem Schutzdach eine hinreichend bequeme Sitzmöglichkeit zum aufrechten Sitzen benötigt, baut das derart ausgestattete Laderfahrzeug relativ hoch. Das Durchfahren von Durchfahrtshöhen unter 2 m ist damit nicht mehr möglich, was in vielen landwirtschaftlichen Betrieben, aber auch in Parkhäusern oder Tiefgaragen problematisch sein kann. Der Abbau des starren Schutzaufbaus ist nur mit erheblichem Zeitaufwand möglich und daher in der Praxis kaum umsetzbar.

Aus der DE 10 2010 024 687 A1 ist ein klappbares Fahrerschutzdach bekannt, bei dem eine Dacheinrichtung in einem aufgestellten Betriebszustand an ihren Eckbereichen durch vier Säulen gestützt ist. Die Dacheinrichtung kann von den vorderen beiden Säulen gelöst und nach hinten geklappt werden. Die Säulen ihrerseits können ebenfalls abgeklappt werden, so dass die Gesamthöhe des Fahrzeugs vermindert werden kann.

Ein anderes höhenverstellbares Fahrerschutzdach ist aus der DE 20 2012 008 838 U1 bekannt. Auch dort ist eine Dacheinrichtung auf vier Säulen getragen, wobei die oberen Elemente der Säulen mithilfe von Gelenkstücken wegklappbar sind. Die Dacheinrichtung kann somit durch einfaches Vor- und Zurückbewegen aufgestellt beziehungsweise abgeklappt werden.

Bei den bekannten Fahrerschutzdächern ist es erforderlich, dass der Fahrer aus dem Fahrzeug aussteigt, wenn er die Höhe des Fahrerschutzdachs verändern möchte beziehungsweise das Fahrerschutzdach wegklappen will. Ebenso muss er nach Durchfahren zum Beispiel einer niedrigen Toreinfahrt anschließend das Fahrerschutzdach wieder hochklappen beziehungsweise aufstellen. Auch dazu muss er aus dem Fahrzeug aussteigen und die entsprechenden Handlungen vornehmen. Da somit für den Umbau ein gewisser Aufwand erforderlich ist, zumindest aber aufgrund des häufigen Ein- und Aussteigens eine Komforteinbuße zu verzeichnen ist, kann beobachtet werden, dass viele Fahrer es - entgegen der gesetzlichen Vorschriften - unterlassen, das Fahrerschutzdach jeweils in die vorgeschriebene, nämlich aufgestellte Position zu bringen.

Aus der EP 0 904 967 A2 ist ein Fahrerschutzdach bekannt, das auf vier Stützen getragen wird, die jeweils umklappbar sind. Zum Umklappen ist an jeder der Stützen ein Antriebsmechanismus mit einer Kolben-Zylinder-Einheit vorgesehen.

In der JP S59 76337 A wird ein Raupenfahrzeug mit einem absenkbaren Kabinendach beschrieben. Zum Absenken und Anheben des Kabinendachs sind an den vorderen Stützen des Dachs Lenker vorgesehen, die mit dem Hubarm des Raupenfahrzeugs verbindbar sind. Durch Absenken oder Anheben des Hubarms kann auch das angekoppelte Kabinendach bewegt werden.

Der Erfindung liegt die Aufgabe zugrunde, ein Fahrerschutzdach anzugeben, bei dem wenigstens kurzzeitig und in einer für den Fahrer bequemen Weise eine niedrigere Bauhöhe eines mit dem Fahrerschutzdach ausgestatteten Fahrzeugs möglich ist.

Die Aufgabe wird erfindungsgemäß durch ein absenkbares Fahrerschutzdach mit den Merkmalen von Anspruch 1 gelöst. Vorteilhafte Ausgestaltungen sind in den abhängigen Ansprüchen angegeben.

Es wird ein absenkbares Fahrerschutzdach angegeben, mit einer Dacheinrichtung, die zwischen einem aufgestellten Betriebszustand und einem abgesenkten Betriebszustand bewegbar ist, wobei die Dacheinrichtung in dem aufgestellten Betriebszustand und in dem abgesenkten Betriebszustand an ihren Eckbereichen durch vier Säulen gestützt ist, jede der Säulen jeweils eine mit einem Fahrzeug verbindbare starre Stütze und eine relativ zu der starren Stütze zwischen einer aufgestellten Endstellung und einer abgesenkten Endstellung verschwenkbare Stütze aufweist, die abgesenkte Endstellung einer Stellung entspricht, in der sich ein oberes Ende der verschwenkbaren Stützen auf einem niedrigeren Höhenniveau befindet als in der aufgestellten Endstellung, und wobei die Dacheinrichtung in der aufgestellten Endstellung der verschwenkbaren Stützen an den oberen Enden der verschwenkbaren Stützen verschwenkbar gehalten ist, dadurch gekennzeichnet, dass ein Antrieb vorgesehen ist, zum Bewegen der Dacheinrichtung zwischen dem aufgestellten Betriebszustand und dem abgesenkten Betriebszustand.

Das Fahrerschutzdach ist somit in ähnlicher Weise aufgebaut wie das Fahrerschutzdach aus der DE 20 2012 008 838 U1. Bei jener Veröffentlichung muss die Dacheinrichtung manuell zwischen dem aufgestellten Betriebszustand und dem abgesenkten Betriebszustand bewegt werden, so dass es dort erforderlich ist, dass der Fahrer jeweils absteigt und die entsprechenden Handlungen vornimmt.

Bei dem erfindungsgemäßen Fahrerschutzdach ist hingegen der Antrieb vorgesehen, der die Bewegung der Dacheinrichtung zwischen dem aufgestellten Betriebszustand und dem abgesenkten Betriebszustand, also sowohl aus dem aufgestellten Betriebszustand in den abgesenkten Betriebszustand als auch aus dem abgesenkten Betriebszustand wieder zurück in den aufgestellten Betriebszustand vornimmt. Der Fahrer kann den Antrieb betätigen, während er auf dem Fahrersitz des Fahrzeugs sitzen bleibt. Er muss also nicht das Fahrzeug verlassen oder von dem Fahrersitz absteigen.

Dadurch wird eine erhebliche Komfortsteigerung erreicht, die es für den Fahrer bequem macht, die Höhenstellung der Dacheinrichtung jeweils der Situation anzupassen. Insbesondere kann der Fahrer kurz vor dem Durchqueren einer niedrigen Toreinfahrt den Antrieb betätigen, so dass die Dacheinrichtung in den abgesenkten Betriebszustand abgesenkt wird. Nach dem Durchfahren der Toreinfahrt (was in der Regel nur wenige Sekunden dauert) kann der Fahrer durch erneutes Betätigen des Antriebs die Dacheinrichtung wieder in den Normalzustand, also in den aufgestellten Betriebszustand zurückbewegen.

Als abgesenkter Betriebszustand ist auch eine Teilabsenkung zu verstehen, bei der die Dacheinrichtung nicht in die niedrigste abgesenkte Endstellung bewegt wird, sondern nur insoweit abgesenkt wird, als es für das Durchfahren einer Toreinfahrt im konkreten Fall notwendig ist.

Die vier verschwenkbaren Stützen befinden sich in dem aufgestellten Betriebszustand oberhalb der jeweils zugeordneten starren Stützen. Das bedeutet, dass die aufgestellte Endstellung einer Stellung entspricht, in der sich die verschwenkbaren Stützen im Wesentlichen in Verlängerung der starren Stützen erstrecken, um eine maximale Höhe der Dacheinrichtung zu erreichen, so dass der Fahrer bequem unterhalb der Dacheinrichtung sitzen kann. Nach dem Verschwenken beziehungsweise Wegklappen der vier verschwenkbaren Stützen wird die Dacheinrichtung mit abgesenkt, auf das jeweils erforderliche Höhenniveau.

Der Antrieb bewirkt eine Kraftwirkung zwischen wenigstens einer der starren Stützen und der dieser starren Stütze zugeordneten verschwenkbaren Stütze. Es können aber auch zwei Antriebe vorhanden sein, die dann jeweils zwischen einer starren Stütze und einer zugeordneten verschwenkbaren Stütze wirken. Es hat sich zweckmäßig erwiesen, dass der eine Antrieb oder die beiden Antriebe an den in Fahrtrichtung gesehen hinteren Stützen angeordnet sind.
Der Antrieb kann zwei Befestigungspunkte aufweisen, von denen einer an der starren Stütze und der andere an der verschwenkbaren Stütze verschwenkbar befestigt ist.
Der Antrieb kann Kraftmittel aufweisen, die zum Erzeugen einer Druckkraft und/oder einer Zugkraft dienen und damit eine Abstandsänderung zwischen den beiden Befestigungspunkten bewirken können. Der Antrieb bewirkt somit, dass die Befestigungspunkte auseinandergedrückt oder zusammengezogen werden, wodurch die verschwenkbare Stütze relativ zu der starren Stütze verschwenkt wird. Indem die weiteren verschwenkbaren Stützen dieser Bewegung folgen, wird auch die Dacheinrichtung bewegt.
Der Antrieb kann ein elektrischer Antrieb, ein hydraulischer Antrieb, ein pneumatischer Antrieb oder ein Handkraft-Antrieb sein.
Als Handkraft-Antrieb ist ein Antrieb zu verstehen, der vom Fahrer insbesondere in seiner sitzenden Position auf dem Fahrersitz betätigt werden kann und der dann die Dacheinrichtung bewegt. Zum Beispiel ist es möglich, den Handkraft-Antrieb mithilfe von Seilzügen und Hebeln zu realisieren. Wenn der Fahrer einen entsprechenden Hebel bewegt, folgt die Dacheinrichtung dieser Bewegung, wenn mittels eines Seilzugs oder weiterer Hebelelemente die Kraft des Fahrers auf die Bewegung der Stützen übertragen wird.
Die verschwenkbaren Stützen können aus der aufgestellten Endstellung in einen Bereich bis zu 30 Grad oder auch mehr, zum Beispiel bis zu 90 Grad verschwenkt werden. Ein Verschwenkungswinkel von maximal 70 bis 80 Grad hat sich als zweckmäßig erwiesen, wobei die verwenkbaren Stützen in der aufgestellten EndStellung nahezu vertikal und in der abgesenkten Endstellung nahezu horizontal stehen.

Die verschwenkbaren Stützen können, bezogen auf eine Hauptfahrtrichtung des Fahrzeugs, nach hinten verschwenkbar sein. Dadurch wird eine Kollision des Dachs mit dem Hindernis vermieden. Gleichzeitig bleibt die Schutzwirkung für den Fahrer erhalten.

Alternativ ist es möglich, dass die verschwenkbaren Stützen nach vorne verschwenkbar sind, um eine Absenkung der Dacheinrichtung zu bewirken. Der Antrieb ist dann entsprechend sinnvoll anzuordnen.

Zwischen den starren Stützen und den verschwenkbaren Stützen kann jeweils eine Gelenkeinrichtung vorgesehen sein, um die Verschwenkbarkeit zu gewährleisten.

In dem aufgestellten Betriebszustand können die verschwenkbaren Stützen in ihrer aufgestellten Endstellung stehen und die Dacheinrichtung tragen, wobei die verschwenkbaren Stützen in dem abgesenkten Betriebszustand in die abgesenkte Endstellung verschwenkbar sind.

Die Enden von zwei der verschwenkbaren Stützen, insbesondere der hinteren verschwenkbaren Stützen, können durch einen Querträger miteinander verbunden sein, so dass diese beiden verschwenkbaren Stützen mit dem Querträger einen Überrollbügel bilden. Die Verbindung der Stützen mithilfe von Querträgern stabilisiert den Aufbau erheblich und ermöglicht so eine Käfigstruktur von hoher Festigkeit.

Bei einer Ausführungsform ist eine Steuerung zum Ansteuern des Antriebs vorgesehen, wobei zwei Bedieneinrichtungen mit der Steuerung verbunden sind und der Antrieb nur dann aktivierbar ist, wenn beide Bedieneinrichtungen betätigt werden. Die Bedieneinrichtungen ermöglichen es dem Fahrer, den Antrieb anzusteuern. Mithilfe der beiden Bedieneinrichtungen kann ein Sicherheitssystem geschaffen werden, derart, dass der Antrieb nur dann aktivierbar ist, wenn beide Bedieneinrichtungen gleichzeitig betätigt werden. Der Fahrer muss zum Beispiel mit beiden Händen gleichzeitig die den Händen jeweils zugeordneten Bedieneinrichtungen betätigen. Erst dann wird der Antrieb aktiviert und die Dacheinrichtung bewegt.

An einer der verschwenkbaren Stützen kann eine Höhenanzeigeeinrichtung angeordnet sein, wobei die Höhenanzeigeeinrichtung eine Winkelstellung zwischen dem oberen Ende der betreffenden verschwenkbaren Stütze und der Dacheinrichtung anzeigt. Die angezeigte Winkelstellung ist zu der aktuellen Höhenstellung der Dacheinrichtung proportional, so dass der Fahrer aufgrund der Winkelstellung auf die tatsächliche Höhenstellung rückschließen kann. Mit anderen Worten wird aufgrund des eindeutigen Zusammenhangs zwischen der Winkelstellung, die zwischen der verschwenkbaren Stütze und der Dacheinrichtung jeweils vorliegt, einerseits und der Höhenstellung der Dacheinrichtung andererseits dem Fahrer eine wertvolle Information übermittelt.

Wenn z.B. die Höhenanzeigeeinrichtung beziehungsweise die Winkelstellung mit einer Skala versehen ist, kann der Fahrer, der häufig stets die gleichen Fahrten durchführen wird und dabei immer wieder zum Beispiel das gleiche, niedrige Tor durchfahren muss, sich den Winkelwert und dementsprechend die Höhenstellung der Dacheinrichtung merken, die notwendig ist, um die betreffende Toreinfahrt sicher zu durchfahren. Er stellt die Dacheinrichtung bei nachfolgenden Fahrten dann immer auf die notwendige Höhe ein.

Die Höhenanzeigeeinrichtung kann insbesondere an einer der vorderen verschwenkbaren Stützen vorgesehen sein, da diese im Blickbereich des Fahrers liegen und daher für ihn leicht ablesbar sind.

Die Dacheinrichtung kann einen Träger und eine von dem Träger gehaltene Sicherheitsklappe aufweisen, wobei die Sicherheitsklappe wenigstens in dem abgesenkten Betriebszustand der Dacheinrichtung relativ zu dem Träger verschwenkbar ist. Wenn die Dacheinrichtung hingegen durchgehen starr ist, besteht eine gewisse Gefahr, dass der Kopf des Fahrers in Mitleidenschaft gezogen wird, wenn die Dacheinrichtung aus dem aufgestellten Betriebszustand in den abgesenkten Betriebszustand bewegt wird. Aufgrund der verschwenkbaren Sicherheitsklappe ist es jedoch möglich, dass bei einer Kollision der Dacheinrichtung beziehungsweise insbesondere der Sicherheitsklappe mit dem Kopf des Fahrers die Sicherheitsklappe nach oben ausweicht, um ein Quetschen des Kopfes oder zumindest Wegdrücken des Kopfes zu verhindern.

Es kann eine Verriegelungseinrichtung vorgesehen sein, zum Verriegeln der Sicherheitsklappe derart, dass die Sicherheitsklappe wenigstens in dem aufgestellten Betriebszustand nicht relativ zu dem Träger verschwenkbar ist. Im aufgestellten Betriebszustand, also dem Normalzustand, sollte die Sicherheitsklappe fest mit dem Träger verbunden, also jedenfalls nicht relativ zu ihm verschwenkbar sein, um eine ausreichende Schutzwirkung zu erreichen. Nur dann, wenn der aufgestellte Betriebszustand nicht vorliegt, also die Dacheinrichtung bereits etwas abgesenkt wurde, wird die Verriegelung gelöst, so dass die Sicherheitsklappe relativ zu dem Träger verschwenkbar ist.

Die Verriegelungseinrichtung kann eine formschlüssige Verriegelung aufweisen. Die formschlüssige Verriegelung kann insbesondere zwischen einer oder mehreren der verschwenkbaren Stützen und der Sicherheitsklappe bewirkt werden.

Die formschlüssige Verriegelung kann einen Zapfen, der an einer der vorderen verschwenkbaren Stützen vorgesehen ist, und eine Öffnung aufweisen, die an der Sicherheitsklappe vorgesehen ist. In dem aufgestellten Betriebszustand kann der Zapfen in die Öffnung eingreifen, derart, dass die Sicherheitsklappe in ihrer Stellung gehalten wird. Wenn die Dacheinrichtung aus dem aufgestellten Betriebszustand in den abgesenkten Betriebszustand bewegt wird, kann der Eingriff des Zapfens in die Öffnung gelöst werden. Für die Lösung des Eingriffs ist es nicht erforderlich, dass die Dacheinrichtung vollständig in den abgesenkten Betriebszustand bewegt wird. Vielmehr genügt es, dass sie aus dem aufgestellten Betriebszustand heraus bewegt wird. Bereits nach einem geringen Schwenkwinkel der verschwenkbaren Stützen wird die formschlüssige Verbindung mit der Sicherheitsklappe gelöst, so dass die Sicherheitsklappe relativ zu dem Träger verschwenkt werden kann.

Ergänzend oder alternativ kann an der Dacheinrichtung eine Kontakteinrichtung vorgesehen sein, zum Detektieren einer Berührung, insbesondere einer Berührung mit dem Kopf des Fahrers. Dann, wenn die Kontakteinrichtung eine Berührung erkannt hat, kann der Antrieb derart ansteuerbar sein, dass keine Bewegung der Dacheinrichtung in Richtung des abgesenkten Betriebszustands erfolgt. Wenn also die Kontakteinrichtung die Berührung, zum Beispiel mit dem Kopf des Fahrers, feststellt, kann der Antrieb gestoppt werden. Ebenso ist es möglich, dass der Antrieb wenigstens kurzzeitig in die entgegengesetzte Richtung betrieben wird, um die Dacheinrichtung anzuheben und den Kontakt wieder zu lösen.

Die Kontakteinrichtung kann insbesondere an der Unterseite der Dacheinrichtung vorgesehen sein, nämlich im Bereich des Kopfes des Fahrers. Zum Beispiel ist es möglich, die Kontakteinrichtung als Kontaktmatte auszuführen, so dass auch ein Kontakt über eine größere Fläche erkannt werden kann.

Ergänzend oder alternativ ist es auch möglich, dass die Kontakteinrichtung mit der Sicherheitsklappe gekoppelt ist, um insbesondere ein Öffnen bzw. Anheben der Sicherheitsklappe zu detektieren. Sobald also die Sicherheitsklappe angehoben wird, wird dies durch die Kontakteinrichtung erkannt, so dass über die Steuerung ein weiteres Absenken der Dacheinrichtung unterbunden werden kann.

Ergänzend oder alternativ kann eine Krafterkennungseinrichtung und/oder eine Kraftbegrenzungseinrichtung vorgesehen sein, zum Erkennen und/oder Begrenzen einer Kraft, die zum Bewegen der Dacheinrichtung durch den Antrieb bewirkt werden muss.

Damit kann erreicht werden, dass beim Absenken oder Anheben der Dacheinrichtung eine vorgegebene Kraft nicht überschritten wird. Wenn die Dacheinrichtung beim Absenken z.B. gegen ein Hindernis, wie z.B. den Kopf des Bedieners, drückt, steigt die zum Absenken notwendige Kraft gegebenenfalls über die vorgegebene Kraft an. Mithilfe der Krafterkennungseinrichtung bzw. der Kraftbegrenzungseinrichtung kann aber erreicht werden, dass die vom Antrieb bewirkte Kraft nicht größer wird als die vorgegebene Kraft, bei der eine Verletzung des Bedieners oder eine Beschädigung von anderen Hindernissen ausgeschlossen ist. Die Dacheinrichtung drückt dann lediglich mit der maximal zulässigen, aber unkritischen Kraft gegen das Hindernis.

Ebenso ist es möglich, dass dann, wenn die Krafterkennungseinrichtung beim Bewegen der Dacheinrichtung ein Ansteigen der zum Bewegen erforderlichen Kraft feststellt, entsprechende Schutzmaßnahmen eingeleitet werden. Als Schutzmaßnahme kann z.B. die Bewegung des Daches gestoppt oder umgekehrt werden.

Die Krafterkennungseinrichtung kann eine Sensoreinrichtung aufweisen, mit der die beim Bewegen der Dacheinrichtung wirkenden Kräfte erfasst werden. Z.B. kann auch der Hydraulikdruck in dem Hydraulikzylinder des Hydraulikantriebs oder eine Stromaufnahme eines als Teil des Antriebs dienenden Elektromotors ausgewertet werden. Bei einem Anstieg des Hydraulikdrucks bzw. der Stromaufnahme wird festgestellt, dass eine stärkere Kraft auf die Dacheinrichtung einwirkt. Der Kraftanstieg ist wiederum ein Indiz für eine Kollision des Daches mit einem Hindernis.

Mithilfe der Kraftbegrenzungseinrichtung kann erreicht werden, dass in keinem Fall eine erhöhte, über der zulässigen Kraft liegende Kraft wirkt. Dieser Effekt kann z.B. auch durch mechanische Mittel wie eine Rutschkupplung, ein Sollbruchelement etc. erreicht werden.

An einer der verschwenkbaren Stützen kann eine Leuchteinrichtung angeordnet sein. Bei der Leuchteinrichtung kann es sich zum Beispiel um eine Rundumleuchte beziehungsweise Warnleuchte handeln, die für den Betrieb von Hofladern erforderlich sein kann.

Die Leuchteinrichtung kann insbesondere an einer der in Fahrtrichtung gesehen hinteren verschwenkbaren Stützen oder an einem die hinteren Stützen verbindenden Querträger angebracht sein. Beim Absenken der Dacheinrichtung schwenkt die Leuchteinrichtung zusammen mit der sie tragenden verschwenkbaren Stütze nach hinten weg und wird ebenfalls abgesenkt, wodurch die Höhe vermindert wird.

Wenigstens eine der verschwenkbaren Stützen kann eine Abschrägung aufweisen, die sich in einer Horizontalebene erstreckt, wenn die verschwenkbare Stütze in einer abgesenkten Stellung steht. Durch die Abschrägung, die auch an allen oder wenigsten nur den hinteren verschwenkbaren Stützen vorgesehen ist, kann somit die Gesamthöhe gegebenenfalls um einige Zentimeter vermindert werden.

Die Dacheinrichtung kann derart an den verschwenkbaren Stützen angelenkt sein, dass sich die Dacheinrichtung in dem abgesenkten Betriebszustand, bezogen auf eine Hauptfahrtrichtung, größtmöglich nach vorne erstreckt. Insbesondere kann dabei der hintere obere Drehpunkt zwischen der Dacheinrichtung und der beiden die Dacheinrichtung tragenden hinteren verschwenkbaren Stützen so gewählt sein, dass die Dacheinrichtung im abgesenkten Betriebszustand den Fahrer und insbesondere seine Knie bestmöglich abdeckt. Durch geeignete Wahl des Drehpunktes, der an den verschwenkbaren Stützen sowohl nach hinten als auch nach unten versetzt werden sollte, kann erreicht werden, dass das Dach maximal nach vorne übersteht.

Weiterhin wird ein Fahrzeug angegeben, dass mit einem wie oben beschriebenen absenkbaren Fahrerschutzdach ausgestattet ist. Bei dem Fahrzeug kann es sich insbesondere um einen Hoflader handeln, der geeignet ist, auf engstem Raum zu rangieren und auch durch niedrige Tordurchbrüche zu fahren.

Diese und weitere Vorteile und Merkmale der Erfindung werden nachfolgend anhand eines Beispiels unter Zuhilfenahme der begleitenden Figuren näher erläutert. Es zeigen:
- **Fig. 1**: in Perspektivdarstellung ein erfindungsgemäßes absenkbares Fahrerschutzdach im aufgestellten Betriebszustand;
- **Fig. 2**: das Fahrerschutzdach mit teilweise abgesenkter Dacheinrichtung;
- **Fig. 3**: das Fahrerschutzdach im vollständig abgesenkten Betriebszustand;
- **Fig. 4**: das Fahrerschutzdach im abgesenkten Betriebszustand, mit angehobener Sicherheitsklappe;
- **Fig. 5**: eine Vorderansicht des Fahrerschutzdachs im aufgestellten Betriebszustand;
- **Fig. 6**: eine Schnittdarstellung von Figur 5;
- **Fig. 7**: eine Detailansicht einer Verriegelungseinrichtung und einer Höhenanzeigeeinrichtung, im aufgestellten Betriebszustand; und
- **Fig. 8**: die Verriegelungseinrichtung und die Höheneinrichtung in einem teilweise abgesenkten Betriebszustand.

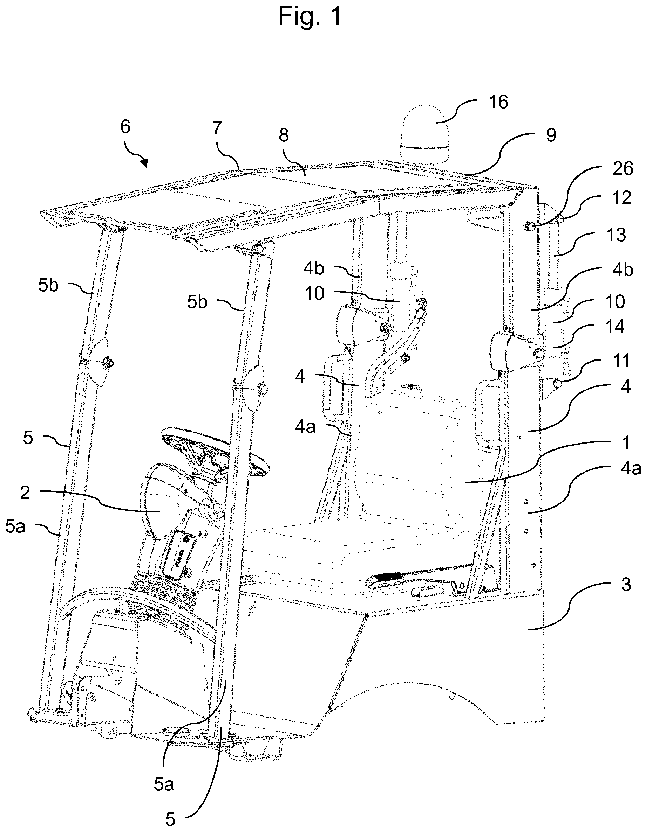

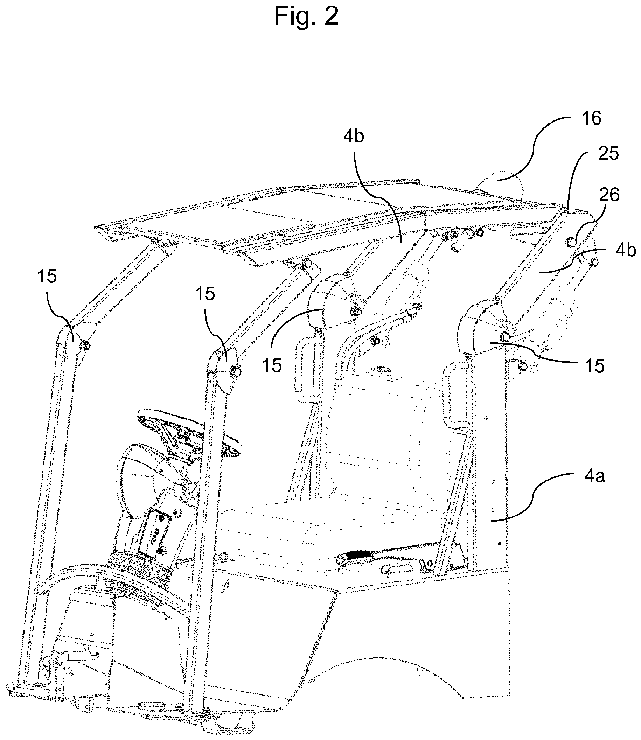

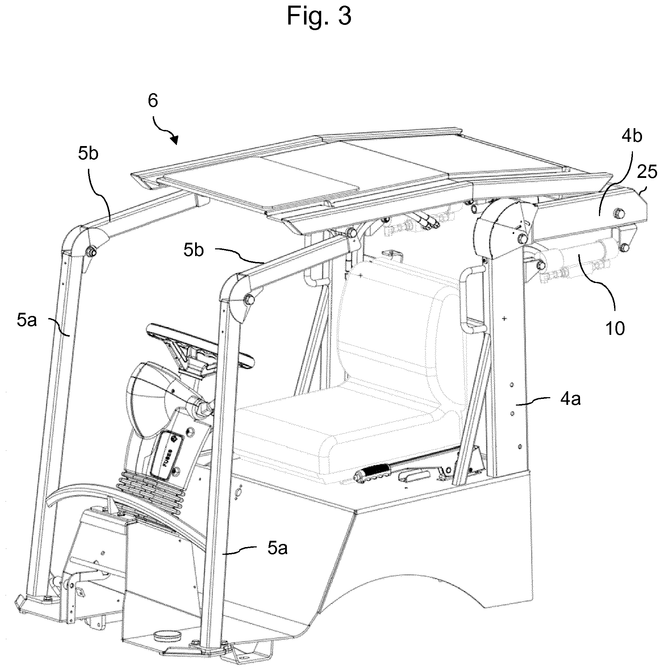

Die Figuren 1 bis 3 zeigen in Perspektivansicht unterschiedliche Zustände eines absenkbaren Fahrerschutzdaches, wobei Figur 1 das Fahrerschutzdach in einem aufgestellten Betriebszustand, Figur 2 das Fahrerschutzdach in einem teilweise abgesenkten Betriebszustand und Figur 3 das Fahrerschutzdach in einem vollständig abgesenkten Betriebszustand zeigt. Im Normalbetrieb sollte das Fahrerschutzdach im aufgestellten Betriebszustand sein, um für den Fahrer den FOPS- und ROPS-Schutz zu gewährleisten. Für das Unterfahren von niedrigen Torhöhen ist es aber hilfreich, das Fahrerschutzdach abzusenken, so dass der in Figur 3 gezeigte Betriebszustand erreicht werden kann, bei dem die Gesamthöhe deutlich geringer ist.

In dem Betriebszustand von Figur 3 ist immer noch ein Schutz gewährleistet.

Das Fahrerschutzdach kann insbesondere auf einem Laderfahrzeug, aber auch auf anderen Arbeitsgeräten, wie sie zum Beispiel in der EN 474 genannt sind, angebracht werden. Von dem Laderfahrzeug ist in den Figuren jedoch lediglich ein Teil, nämlich ein Fahrersitz 1, eine Lenksäule 2 und eine Motorabdeckung 3 gezeigt.

Das Fahrerschutzdach weist vier Säulen, nämlich zwei hintere Säulen 4 und zwei vordere Säulen 5 auf. Die Säulen 4, 5 unterteilen sich jeweils in eine starre Stütze 4a, 5a und in eine verschwenkbare Stütze 4b beziehungsweise 5b, die über ein Scharnier relativ zu der starren Stütze 4a, 5a verschwenkt werden kann.

An den Enden der Säulen 4, 5 ist eine Dacheinrichtung 6 gehalten, die einen Gabel- beziehungsweise Rahmenförmigen Träger 7 und eine relativ zu dem Träger 7 im hintere Bereich verschwenkbar gehaltene Sicherheitsklappe 8 aufweist.

Die Dacheinrichtung 6 ist an den Enden der Säulen 4, 5 jeweils mithilfe von Gelenken beziehungsweise Scharnieren verschwenkbar gelagert. Dabei ist es möglich, die Enden der hinteren Säulen 4 durch einen als Überrollbügel dienenden Querträger 9 zu verbinden.

An den hinteren Säulen 4 ist jeweils eine als Antrieb dienende Hydraulikeinheit 10 vorgesehen, die wirkungsmäßig zwischen der jeweiligen starren Stütze 4a und der verschwenkbaren Stütze 4b angeordnet ist. Dabei ist jeweils ein Befestigungspunkt 11 an der starren Stütze 4a und ein weiterer Befestigungspunkt 12 an der verschwenkbaren Stütze 4b angeordnet.

Die Hydraulikeinheit 10 besteht zum Beispiel aus einer Kolben-Zylindereinheit und kann somit den Abstand zwischen den Befestigungspunkten 11 und 12 mithilfe einer Zug- oder Druckwirkung verändern.

Alternativ zu der Hydraulikeinheit 10 kann auch ein elektrischer Antrieb, zum Beispiel mit Zahnstangen, Zahnrädern oder Spindelelementen vorgesehen sein. Ebenso ist es möglich, eine Pneumatikeinheit anzuordnen.

Durch Betätigen der Hydraulikeinheiten 10 kann ein Kolben 13 in einen zugeordneten Zylinder 14 bewegt werden. Dementsprechend werden - wie in den Figuren 2 und 3 gezeigt - die verschwenkbaren Stützen 4b, 5b relativ zu den starren Stützen 4a, 5a verschwenkt, so dass sich die Dacheinrichtung 6 bis in den vollständig abgesenkten Betriebszustand (Figur 3) absenkt.

Die Bedienung der Hydraulikeinheiten 10 erfolgt mithilfe von zwei Bedienelementen, zum Beispiel einem Taster und einem Joystick, mit dem der Fahrer das Fahrzeug bzw. die Arbeitshydraulik steuern kann. Nur dann, wenn der Fahrer mit beiden Händen die jeweils einer Hand zugeordneten Bedienelemente betätigt (Zweihandbedienung), werden auch die Hydraulikeinheiten 10 aktiviert, so dass die Dacheinrichtung 6 hoch oder runter bewegt werden kann.

Der in den Figuren nicht dargestellte Joystick kann dabei genutzt werden, um ein Kommando zum Hochfahren oder Herunterfahren der Dacheinrichtung 6 zu geben. Durch das zusätzliche Betätigen eines weiteren Schalters werden die Hydraulikeinheiten 10 aktiviert.

Durch die Anlenkung der Dacheinrichtung 6 an den vier verschwenkbaren Stützen 4b, 5b wird eine Parallelführung bzw. eine annähernde Parallelführung der Dacheinrichtung 6 bewirkt, so dass die Dacheinrichtung 6 nach wie vor weitgehend horizontal orientiert bleibt.

Zwischen den starren Stützen 4a, 5a und den verschwenkbaren Stützen 4b, 5b können Gelenkabdeckungen 15 vorgesehen sein (Figur 2), um den bei einem Verschwenken der verschwenkbaren Stützen 4b, 5b entstehenden Zwischenraum zuverlässig abzudecken. Dadurch wird einer Gefahr für den Fahrer durch Einklemmen zwischen den Stützen vorgebeugt.

An einer der Stützen 4b, 5b beziehungsweise an dem die hinteren verschwenkbaren Stützen 4b verbindenden Querträger 9 ist eine Rundumleuchte 16 gehalten, die eine Warnfunktion erfüllt. Wie insbesondere in Figur 2 und Figur 3 erkennbar, verschwenkt die Rundumleuchte 16 ebenfalls nach unten, wodurch die Gesamthöhe stark vermindert wird.

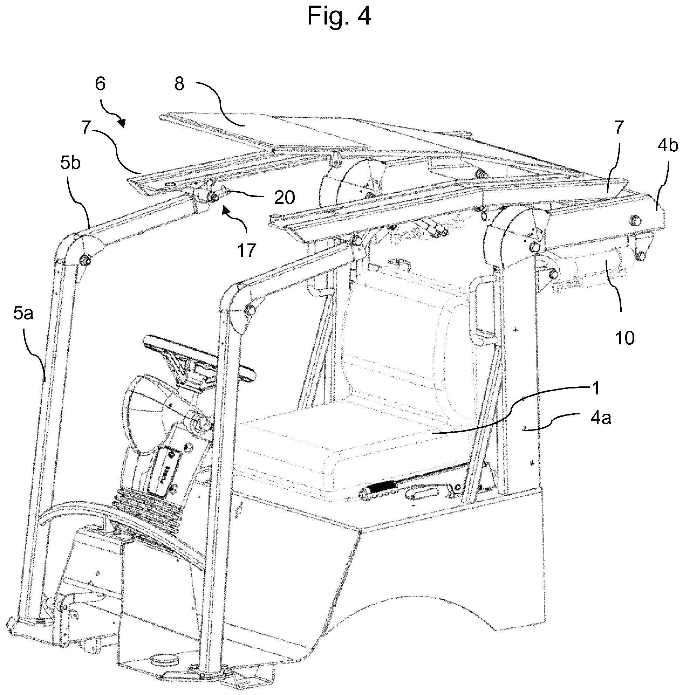

Figur 4 zeigt den Aufbau der Dacheinrichtung 6 dahingehend, dass die Sicherheitsklappe 8 relativ zu dem Träger 7 verschwenkt werden kann. Dazu ist im hinteren Teil zwischen dem Träger 7 und der Sicherheitsklappe 8 eine Gelenkeinrichtung beziehungsweise Drehachse vorgesehen, so dass die Sicherheitsklappe 8 insbesondere nach oben weggeklappt werden kann. Auf diese Weise kann der auf dem Fahrersitz 1 sitzende Fahrer beim Herabbewegen der Dacheinrichtung 6 geschützt werden. Wenn aufgrund einer Unachtsamkeit des Fahrers sein Kopf bereits an die Dacheinrichtung 6 stößt und der Kopf nicht ausweichen kann, würde bei einer starren Dacheinrichtung die Gefahr einer Quetschung des Fahrers bestehen. Da jedoch - wie in Figur 4 gezeigt - die Sicherheitsklappe 8 nach oben hochklappen kann, bewegt sich lediglich der den Fahrer umgebende Träger 7 weiter nach unten. Eine zusätzliche und unter Umständen gefährliche Druckkraft auf den Kopf des Fahrers kann hingegen nicht ausgeübt werden.

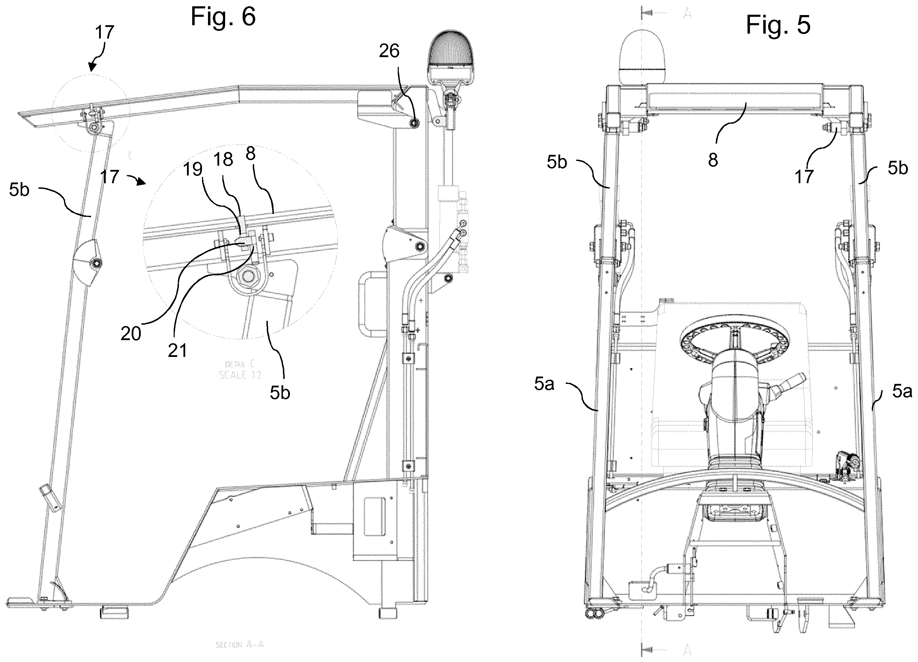

Die Sicherheitsklappe 8 ist in dem aufgestellten Betriebszustand (Figur 1) formschlüssig mit dem Träger 7 bzw. den vorderen verschwenkbaren Stützen 5b verriegelt, so dass die Sicherheitsklappe 8 in diesem Zustand nicht hochgeklappt werden kann. Dies wird durch eine Verriegelungseinrichtung 17 bewirkt, die unter Zuhilfenahme der Schnittdarstellung in Figur 6 erläutert werden soll.

Figur 6 zeigt einen Schnitt entlang der Linie A-A in der Vorderansicht von Figur 5.

Die Verriegelungseinrichtung 17 ist in der Detailansicht C von Figur 6 dargestellt. Eine Lasche 18 ist an der Sicherheitsklappe 8 befestigt, zum Beispiel angeschweißt. In der Lasche 18 ist eine Öffnung 19 ausgebildet, in die ein Bolzen 20 eingreift, der seinerseits über eine Lasche 21 mit der verschwenkbaren Stütze 5b verbunden ist.

Dadurch wird eine formschlüssige Verriegelung zwischen der Sicherheitsklappe 8 und der verschwenkbaren Stütze 5b im aufgestellten Betriebszustand erreicht.

Sobald die verschwenkbare Stütze 5b nach hinten geschwenkt, also abgesenkt wird, bewegt sich der Bolzen 20 aus der Öffnung 19 und gibt dadurch die Lasche 18 frei. Figur 4 zeigt den nach hinten geschwenkten Bolzen 20. Dadurch wird auch die Sicherheitsklappe 8 freigegeben und kann in der in Figur 4 gezeigten Weise nach oben geschwenkt werden.

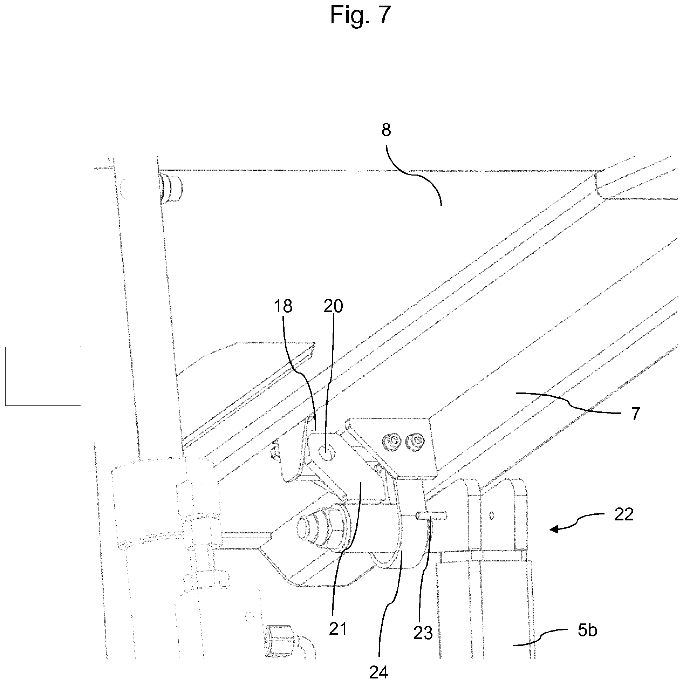

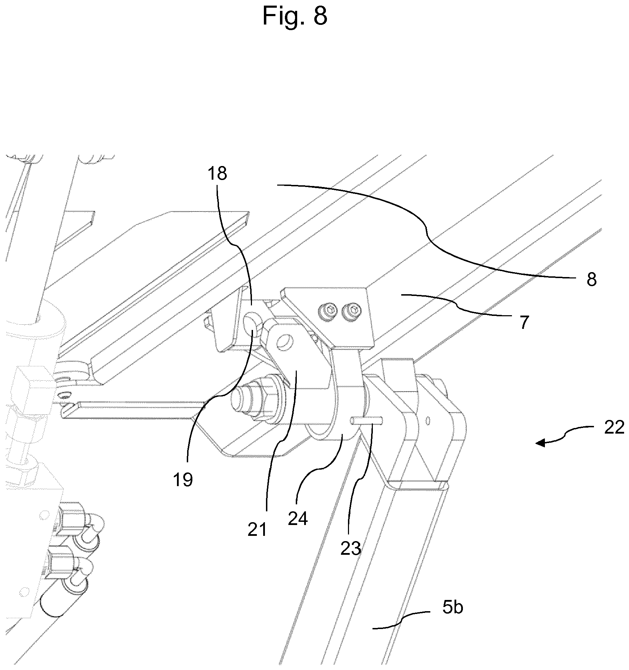

Die Figuren 7 und 8 zeigen diesen Vorgang nochmals aus anderer Perspektive.

In Figur 7 ist der aufgestellte Betriebszustand dargestellt, bei dem der Bolzen 20 in die Öffnung 19 der Lasche 18 eingreift.

In Figur 8 hingegen ist die verschwenkbare Stütze 5b bereits etwas nach hinten verschwenkt, so dass die Öffnung 19 in der Lasche 18 frei liegt.

In den Figuren 7 und 8 ist darüber hinaus eine Höhenanzeigeeinrichtung 22 dargestellt.

Die Höhenanzeigeeinrichtung 22 weist einen Zeiger 23 und eine Skala 24 auf.

Der Zeiger 23 ist am oberen Ende der verschwenkbaren Stütze 5b angebracht und erstreckt sich horizontal. Die Skala 24 weist eine gewisse Krümmung auf und ist an dem Träger 7 gehalten.

Wie aus einem Vergleich zwischen den Figuren 7 und 8 erkennbar ist, wandert der Zeiger 23 entlang der Skala 24 nach unten, wenn die verschwenkbare Stütze 5b abgesenkt, also verschwenkt wird. Je nach Grad der Verschwenkung der verschwenkbaren Stütze 5b erreicht der Zeiger 23 einen bestimmten Punkt auf der Skala 24.

Oft wird es in der Praxis nicht notwendig sein, dass der Fahrer des Fahrzeugs die Dacheinrichtung 6 vollständig absenkt, also in den in Figur 3 gezeigten Betriebszustand bringt. Vielmehr werden häufig auch Zwischenzustände, also teilweise abgesenkte Betriebszustände, wie zum Beispiel in Figur 2 gezeigt, ausreichen, um das Hindernis, zum Beispiel eine niedrige Toreinfahrt, zu überwinden. Da die Fahrzeuge zum Beispiel in einem landwirtschaftlichen Betrieb stets die gleichen Hindernisse zu durchfahren haben, werden auch immer die gleichen Höhenniveaus für die Dacheinrichtung 6 eingestellt werden. Der Fahrer muss sich dann also nur noch merken, an welcher Stelle der Zeiger 23 über der Skala 24 steht, wenn eine ausreichende Absenkung der Dacheinrichtung 6 erreicht wurde. Bei weiteren Fahrten stellt er die Dacheinrichtung 6 dann lediglich nur noch so ein, dass der Zeiger 23 wieder auf der gleichen Stelle über der Skala 24 steht.

Die Enden der beiden hinteren verschwenkbaren Stützen 4b weisen eine Abschrägung 25 auf, wodurch die Gesamthöhe der Anordnung wenigstens um einige Zentimeter vermindert werden kann, wie Figur 2 zeigt.

Die Dacheinrichtung 6 ist relativ zu den beiden hinteren verschwenkbaren Stützen 4b an Drehpunkten 26 verschwenkbar, wenn die verschwenkbaren Stützen 4b abgesenkt werden. Die Drehpunkte 26, die auch in den Figuren 5 und 6 ersichtlich sind, liegen so weit hinten wie möglich, und auch so weit unten wie möglich. Dadurch wird erreicht, dass die Dacheinrichtung 6 auch im abgesenkten Betriebszustand den Maschinenbediener und insbesondere seine Knie größtmöglich abdeckt. Das Dach steht, wie in Figur 3 erkennbar, auch in abgesenktem Zustand relativ weit nach vorne vor.

## Patentansprüche

1. Absenkbares Fahrerschutzdach, mit
- einer Dacheinrichtung (6), die zwischen einem aufgestellten Betriebszustand und einem abgesenkten Betriebszustand bewegbar ist;
wobei
- die Dacheinrichtung (6) in dem aufgestellten Betriebszustand und in dem abgesenkten Betriebszustand an ihren Eckbereichen durch vier Säulen (4, 5) gestützt ist;
- jede der Säulen (4, 5) jeweils eine mit einem Fahrzeug verbindbare starre Stütze (4a, 5a) und eine relativ zu der starren Stütze (4a, 5a) zwischen einer aufgestellten Endstellung und einer abgesenkten Endstellung verschwenkbare Stütze (4b, 5b) aufweist;
- die abgesenkte Endstellung einer Stellung entspricht, in der sich ein oberes Ende der verschwenkbaren Stützen (4b, 5b) auf einem niedrigeren Höhenniveau befindet als in der aufgestellten Endstellung; und wobei
- die Dacheinrichtung (6) in der aufgestellten Endstellung der verschwenkbaren Stützen (4b, 5b) an den oberen Enden der verschwenkbaren Stützen (4b) verschwenkbar gehalten ist;
**dadurch gekennzeichnet, dass**
- ein Antrieb (10) vorgesehen ist, zum Bewegen der Dacheinrichtung (6) zwischen dem aufgestellten Betriebszustand und dem abgesenkten Betriebszustand;
- der Antrieb (10) an einer in Fahrtrichtung gesehen hinteren Säule (4) angeordnet ist; und dass
- der Antrieb (10) eine Kraftwirkung zwischen wenigstens einer der starren Stützen (4a) und der dieser starren Stütze (4a) zugeordneten verschwenkbaren Stütze (4b) bewirkt.

2. Fahrerschutzdach nach Anspruch 1, wobei
- der Antrieb (10) zwei Befestigungspunkte (11, 12) aufweist, von denen einer an der starren Stütze (4a) und der andere an der verschwenkbaren Stütze (4b) verschwenkbar befestigt ist; und wobei
- der Antrieb (10) Kraftmittel aufweist, zum Erzeugen einer Druckkraft und/oder einer Zugkraft und damit Bewirken einer Abstandsänderung zwischen den beiden Befestigungspunkten (11, 12).

3. Fahrerschutzdach nach einem der vorstehenden Ansprüche, wobei der Antrieb (10) ein elektrischer Antrieb, ein hydraulischer Antrieb, ein pneumatischer Antrieb oder ein Handkraft-Antrieb ist.

4. Fahrerschutzdach nach einem der vorstehenden Ansprüche, wobei
- eine Steuerung zum Ansteuern des Antriebs (10) vorgesehen ist;
- zwei Bedieneinrichtungen mit der Steuerung verbunden sind; und wobei
- der Antrieb nur dann aktivierbar ist, wenn beide Bedieneinrichtungen betätigt sind.

5. Fahrerschutzdach nach einem der vorstehenden Ansprüche, wobei
- an einer der verschwenkbaren Stützen (4b) eine Höhenanzeigeeinrichtung (22) angeordnet ist;
- die Höhenanzeigeeinrichtung (22) eine Winkelstellung zwischen dem oberen Ende der betreffenden verschwenkbaren Stütze (4b) und der Dacheinrichtung (6) anzeigt; und wobei
- die angezeigte Winkelstellung zu der aktuellen Höhenstellung der Dacheinrichtung (6) proportional ist.

6. Fahrerschutzdach nach einem der vorstehenden Ansprüche, wobei
- die Dacheinrichtung (6) einen Träger (7) und eine von dem Träger (7) gehaltene Sicherheitsklappe (8) aufweist; und wobei
- die Sicherheitsklappe (8) wenigstens in dem abgesenkten Betriebszustand der Dacheinrichtung (6) relativ zu dem Träger (7) verschwenkbar ist.

7. Fahrerschutzdach nach Anspruch 6, wobei eine Verriegelungseinrichtung (17) vorgesehen ist, zum Verriegeln der Sicherheitsklappe (8) derart, dass die Sicherheitsklappe (8) wenigstens in dem aufgestellten Betriebszustand nicht relativ zu dem Träger (7) verschwenkbar ist.

8. Fahrerschutzdach nach Anspruch 7, wobei die Verriegelungseinrichtung (17) eine formschlüssige Verriegelung aufweist.

9. Fahrerschutzdach nach Anspruch 7 oder 8, wobei
- die formschlüssige Verriegelung einen Zapfen (20), der an einer der vorderen verschwenkbaren Stützen (5b) vorgesehen ist, und eine Öffnung (19), die an der Sicherheitsklappe (8) vorgesehen ist, aufweist,
- in dem aufgestellten Betriebszustand der Zapfen (20) in die Öffnung (19) eingreift, derart, dass die Sicherheitsklappe (8) in ihrer Stellung gehalten wird, und wobei
- wenn die Dacheinrichtung (6) aus dem aufgestellten Betriebszustand in den abgesenkten Betriebszustand bewegt wird, der Eingriff des Zapfens (20) in die Öffnung (19) gelöst wird.

10. Fahrerschutzdach nach einem der vorstehenden Ansprüche, wobei
- an der Dacheinrichtung (6) eine Kontakteinrichtung vorgesehen ist, zum Detektieren einer Berührung; und wobei
- dann, wenn die Kontakteinrichtung eine Berührung erkannt hat, der Antrieb (10) derart ansteuerbar ist, dass keine Bewegung der Dacheinrichtung (6) in Richtung des abgesenkten Betriebszustands erfolgt.

11. Fahrerschutzdach nach einem der vorstehenden Ansprüche, wobei eine Krafterkennungseinrichtung und/oder eine Kraftbegrenzungseinrichtung vorgesehen ist, zum Erkennen und/oder Begrenzen einer Kraft, die zum Bewegen der Dacheinrichtung (6) durch den Antrieb (10) bewirkt werden muss.

12. Fahrerschutzdach nach einem der vorstehenden Ansprüche, wobei wenigstens eine der verschwenkbaren Stützen (4b) eine Abschrägung (25) aufweist, die sich in einer Horizontalebene erstreckt, wenn die verschwenkbare Stütze (4b) in einer abgesenkten Stellung steht.

13. Fahrerschutzdach nach einem der vorstehenden Ansprüche, wobei die Dacheinrichtung (6) derart an den verschwenkbaren Stützen (4b, 5b) angelenkt ist, dass sich die Dacheinrichtung (6) in dem abgesenkten Betriebszustand, bezogen auf eine Hauptfahrtrichtung, größtmöglich nach vorne erstreckt.

14. Fahrzeug mit einem absenkbaren Fahrerschutzdach nach einem der vorstehenden Ansprüche.

## Claims

1. Driver protection roof which can be lowered and comprises
- a roof device (6) which can be moved between a deployed operating state and a lowered operating state;
wherein
- the roof device (6) is supported in the deployed operating state and in the lowered operating state by four columns (4, 5) at its corner regions;
- each of the columns (4, 5) comprises a rigid support (4a, 5a) which can be connected to a vehicle and a support (4b, 5b) which can be pivoted relative to the rigid support (4a, 5a) between a deployed end position and a lowered end position;
- the lowered end position corresponds to a position in which an upper end of the pivotable supports (4b, 5b) is located at a lower height level than in the deployed end position; and wherein
- the roof device (6) is held in a pivotable manner in the deployed end position of the pivotable supports (4b, 5b) at the upper ends of the pivotable supports (4b);
**characterised in that**
- a drive (10) is provided to move the roof device (6) between the deployed operating state and the lowered operating state;
- the drive (10) is arranged on a column (4) which is at the rear as seen in the direction of travel; and **in that**
- the drive (10) effects an action of force between at least one of the rigid supports (4a) and the pivotable support (4b) associated with this rigid support (4a).

2. Driver protection roof as claimed in claim 1, wherein
- the drive (10) comprises two fastening points (11, 12), of which one is pivotably fastened to the rigid support (4a) and the other is pivotably fastened to the pivotable support (4b); and wherein
- the drive (10) comprises force means for generating a compressive force and/or a tractive force and thus effecting a change in the spaced disposition between the two fastening points (11, 12).

3. Driver protection roof as claimed in any one of the preceding claims, wherein the drive (10) is an electric drive, a hydraulic drive, a pneumatic drive or a manual-force drive.

4. Driver protection roof as claimed in any one of the preceding claims, wherein
- a controller is provided to actuate the drive (10);
- two operating devices are connected to the controller; and wherein
- the drive can only be activated when both operating devices are actuated.

5. Driver protection roof as claimed in any one of the preceding claims, wherein
- a height displaying device (22) is arranged on one of the pivotable supports (4b);
- the height displaying device (22) displays an angular position between the upper end of the relevant pivotable support (4b) and the roof device (6); and wherein
- the displayed angular position is proportional to the current height position of the roof device (6).

6. Driver protection roof as claimed in any one of the preceding claims, wherein
- the roof device (6) comprises a carrier (7) and a safety cover (8) held by the carrier (7); and wherein
- the safety cover (8) can be pivoted relative to the carrier (7) at least in the lowered operating state of the roof device (6).

7. Driver protection roof as claimed in claim 6, wherein a locking device (17) is provided for locking the safety cover (8) such that the safety cover (8) cannot be pivoted relative to the carrier (7) at least in the deployed operating state.

8. Driver protection roof as claimed in claim 7, wherein the locking device (17) comprises a form-fitting locking system.

9. Driver protection roof as claimed in claim 7 or 8, wherein
- the form-fitting locking system comprises a pin (20) which is provided on one of the front pivotable supports (5b), and an opening (19) which is provided in the safety cover (8),
- the pin (20) engages into the opening (19) in the deployed operating state such that the safety cover (8) is held in its position, and wherein
- when the roof device (6) is moved from the deployed operating state into the lowered operating state, the engagement of the pin (20) in the opening (19) is released.

10. Driver protection roof as claimed in any one of the preceding claims, wherein
- a contact device is provided on the roof device (6) for detecting contact; and wherein
- when the contact device has recognised contact, the drive (10) can be actuated such that the roof device (6) is not moved in the direction of the lowered operating state.

11. Driver protection roof as claimed in any one of the preceding claims, wherein a force recognition device and/or a force-limiting device is/are provided for recognising and/or limiting a force which must be exerted by the drive (10) to move the roof device (6).

12. Driver protection roof as claimed in any one of the preceding claims, wherein at least one of the pivotable supports (4b) has a bevel (25) which extends in a horizontal plane when the pivotable support (4b) is in a lowered position.

13. Driver protection roof as claimed in any one of the preceding claims, wherein the roof device (6) is articulated on the pivotable supports (4b, 5b) such that the roof device (6) extends towards the front as much as possible, relative to the main direction of travel, in the lowered operating state.

14. Vehicle having a driver protection roof, which can be lowered, as claimed in any one of the preceding claims.

## Revendications

1. Toit de protection de conducteur abaissable avec
- un dispositif de toit (6) qui est mobile entre un état installé et un état abaissé ;
- le dispositif de toit (6) étant soutenu, dans l'état installé et dans l'état abaissé, au niveau de ses angles, par quatre colonnes (4, 5) ;
- chacune des colonnes (4, 5) comprenant un support rigide (4a, 5a) pouvant être relié au véhicule et un support pivotant (4b, 5b) entre une position finale installée et une position finale abaissée ;
- la position finale abaissée correspond à une position dans laquelle une extrémité supérieure des supports pivotants (4b, 5b) se trouve à une hauteur inférieure à la position finale installée ; et
- le dispositif de toit (6) étant maintenu de manière pivotante, dans la position finale installée des supports pivotants (4b, 5b), au niveau des extrémités supérieures des supports pivotants (4b) ;
**caractérisé en ce que**
- un dispositif d'entraînement (10) est prévu, pour le déplacement du dispositif de toit (6) entre l'état installé et l'état abaissé ;
- le dispositif d'entraînement (10) est disposé sur une colonne arrière (4) vue dans le sens de la marche ; et
- le dispositif d'entraînement (10) exerce une force entre au moins un des supports rigides (4a) et le support pivotant (4b) correspondant à ce support rigide (4a).

2. Toit de protection de conducteur selon la revendication 1,
- le dispositif d'entraînement (10) comprend deux points de fixation (11, 12), dont un est fixé de manière pivotante au support rigide (4a) et l'autre est fixé de manière pivotante au support pivotant (4b) ; et
- le dispositif d'entraînement (10) comprend des moyens d'entraînement pour générer une force de pression et/ou une force de traction et donc provoquer une modification de la distance entre les deux points de fixation (11, 12).

3. Toit de protection de conducteur selon l'une des revendications précédentes, le dispositif d'entraînement (10) étant un dispositif d'entraînement électrique, un dispositif d'entraînement hydraulique, un dispositif d'entraînement pneumatique ou un dispositif d'entraînement manuel.

4. Toit de protection de conducteur selon l'une des revendications précédentes,
- un dispositif de commande étant prévu pour la commande dispositif d'entraînement (10) ;
- deux dispositifs d'actionnement étant reliés avec le dispositif de commande ; et
- le dispositif d'entraînement n'étant activable que lorsque les deux dispositifs d'actionnement sont activés.

5. Toit de protection de conducteur selon l'une des revendications précédentes,
- un dispositif d'affichage de hauteur (22) étant disposée sur un des supports pivotants (4b) ;
- le dispositif d'affichage de hauteur (22) affichant une position angulaire entre l'extrémité supérieure du support pivotant (4b) correspondant et le dispositif de toit (6) ; et
- la position angulaire affichée étant proportionnelle à la position en hauteur actuelle du dispositif de toit (6).

6. Toit de protection de conducteur selon l'une des revendications précédentes,
- le dispositif de toit (6) comprenant un support (7) et un clapet de sécurité (8) maintenu par le support (7) ; et
- le clapet de sécurité (8) étant pivotant au moins dans l'état abaissé du dispositif de toit (6) par rapport au support (7).

7. Toit de protection de conducteur selon la revendication 6, un dispositif de verrouillage (17) étant prévu, pour le verrouillage du clapet de sécurité (8), de façon à ce que le clapet de sécurité (8) ne soit pas pivotant par rapport au support (7) au moins dans l'état installé.

8. Toit de protection de conducteur selon la revendication 7, le dispositif de verrouillage (17) comprenant un verrouillage par complémentarité de forme.

9. Toit de protection de conducteur selon la revendication 7 ou 8,
- le verrouillage par complémentarité de forme comprenant un pivot (20) qui est prévu au niveau d'un des supports pivotants avant (5b) et une ouverture (19) qui est prévue sur le clapet de sécurité (8),
- dans l'état installé, le pivot (20) s'emboîtant dans l'ouverture (19) de façon à ce que le clapet de sécurité (8) soit maintenu dans sa position et
- lorsque le dispositif de toit (6) est déplacé de l'état installé vers l'état abaissé, l'emboîtement du pivot (20) dans l'ouverture (19) est défait.

10. Toit de protection de conducteur selon l'une des revendications précédentes,
- sur le dispositif de toit (6), un dispositif de contact étant prévu, pour la détection d'un contact ; et
- lorsque le dispositif de contact a détecté un contact, le dispositif d'entraînement (10) pouvant être commandé de façon à ce qu'aucun mouvement du dispositif de toit (6) n'ait lieu en direction de l'état abaissé.

11. Toit de protection de conducteur selon l'une des revendications précédentes, un dispositif de détection de force et/ou un dispositif de limitation de force étant prévue, pour la détection et/ou la limitation d'une force qui doit être exercée pour le déplacement du dispositif de toit (6) par le dispositif d'entraînement (10).

12. Toit de protection de conducteur selon l'une des revendications précédentes, au moins un des supports pivotants (4b) comprenant un chanfrein (25) qui s'étend dans un plan horizontal lorsque le support pivotant (4b) se trouve dans une position abaissée.

13. Toit de protection de conducteur selon l'une des revendications précédentes, le dispositif de toit (6) étant articulé avec les supports pivotants (4b, 5b) de façon à ce que le dispositif de toit (6) s'étende, dans l'état abaissé, le plus possible vers l'avant par rapport à un sens principal de marche.

14. Véhicule avec un toit de protection de conducteur abaissable selon l'une des revendications précédentes.
